# EUROPEAN PATENT APPLICATION

(11) **EP 3 318 434 A1**
(43) Date of publication of application: **09.05.2018**
(21) Application number: 16306456.1
(22) Date of filing: 07.11.2016
(51) Int. Cl.: B60H 3/06, B60H 1/00, B60S 1/46, B01D 46/00, B01D 65/10, G01N 15/08

(54) **PROCESS OF OPERATING THE AIR CONDITIONING SYSTEM OF A CAB OF A VEHICLE**

(71) Applicant: CNH Industrial France S.A.S., 91150 Morigny-Champigny (FR)
(72) Inventor: The designation of the inventor has not yet been filed
(74) Representative: Sayettat, Julien Christian

(57) **Abstract**

Process of operating the air conditioning system (5) of a cab (1) of a vehicle, said air-conditioning system comprising: a circuit (9) for supplying said cab with air coming at least partially from the exterior of said cab; a blowing device (10) for blowing an air flow inside said circuit; filtration means (11a, 11b) for removing pollutants from the air blown into the cab (1) through said circuit; said process comprising a regular procedure wherein the air-conditioning system (5) is operated to blow the air supplied by said circuit, said process comprising a test of the efficiency of the filtration means (11a, 11b), wherein said test provides for: spraying an identified fluid upstream of the filtration means (11a, 11b) whilst the blowing device (10) is operated to blow an air flow inside the circuit (9); monitoring the air flow supplied by the circuit (9) at a location (22) downstream of the filtration means (11a, 11b) for detection of the possible presence of the sprayed fluid by means of at least one appropriate sensor provided at said downstream location; and providing by means of said sensor a signal representative of the efficiency of said filtration means upon the detection of such a presence.

## Description

The invention relates to a process of operating the air conditioning system of a cab of a vehicle, and a vehicle, in particular an agricultural machine, comprising a cab equipped with an air conditioning system which is adapted to be operated according to such a process.

It applies in particular to the technical domain of mechanical spreading of treatment products, such as phytosanitary products, insecticides or fertilizers, on the harvest plants and/or the plowed soil of an agricultural field, such as a vineyard or an orchard.

To do so, land agricultural machines are known, comprising a motorized support structure which is equipped with a driver station and movable in particular along rows of plants and/or furrows of an agricultural field, a spreading unit being mounted on said structure for straddling at least one of said rows and spreading determined measures of at least one treatment product on said rows.

In particular, such machines are driven by a human operator seating in a closed cab of the driver station for actuating the commands means for moving said machine and/or operating the spreading unit.

Treatment products used in the agricultural domain are generally harmful for the health. In particular, during spreading operations, a quantity of such products may diffuse in the air, in particular in the form of dusts, aerosols and/or vapours, and form air pollutants which, if there are inhaled by the operator, in particular repeatedly, may cause in the long term serious and invalidating professional pulmonary and/or respiratory diseases.

For limiting the risks of exposure of the operator to such air pollutants, cabs are generally equipped with air conditioning systems that are adapted to condition the air circulating in said cabs, in particular by feeding said cabs with air that is mainly free from such pollutants.

Such air-conditioning systems are known, comprising:
- a circuit for supplying the cab with air coming at least partially from the exterior of said cab;
- a blowing device for blowing an air flow inside said circuit;
- filtration means for removing pollutants from the air blown into the cab through said circuit.

Besides, such air-conditioning systems may comply with strict regulatory texts, such as the European standard EN-15695, in particular as regards the flow rate of the air flow, the air pressurization inside the cab and the quality of the filtration means. For example, this standard defines four levelling categories for the security provided to the operator, from a minimal security level (category 1) wherein the health risks are minimal, in particular when the machine is driven on a road, to a maximal security level (category 4), wherein said machine is driven on a field to spray highly polluting products.

In particular, the filtration means, especially the category 4 filtration means, have limited lifetime, and must be regularly replaced for ensuring the safety of the operators.

To do so, the filtrations means are generally replaced after a determined number of hours and/or times of using the machine, said using periods being determined for example according to an average lifetime evaluated during efficiency tests that were performed during the manufacturing of said filtration means.

However, this solution is not totally satisfactory, as it implies the changing of filtration means according to a generic criterion which does not take into account the real saturation state of said filtration means. Thus, some filtration means are automatically changed after the expiry of a generic using period whereas they can still function efficiently, which triggers money losses due to waste.

To try to avoid such a drawback, some solutions have been proposed, for detecting the possible presence of air pollutants within the cab during the operating of the air conditioning system, such a presence being a certain clue of the saturation of the filtration means.

However, such solutions are not satisfactory either, as there are a lot of different spreading products that are used in the agricultural domain, so that the detection of all of said products would be very complex to perform. Moreover, as they rely on the presence of air pollutants to be filtered within the cab, these solutions implies the exposure of the operator to said pollutants, which is not desirable.

The invention aims to improve the prior art by proposing a process of operating the air conditioning system of a cab which allows to protect more efficiently the operator from air pollutants diffused around said cab, in particular by monitoring with more accuracy the efficiency of the filtration means.

For that purpose, and according to a first aspect, the invention relates to a process of operating the air conditioning system of a cab of a vehicle, said air-conditioning system comprising:
- a circuit for supplying said cab with air coming at least partially from the exterior of said cab;
- a blowing device for blowing an air flow inside said circuit;
- filtration means for removing pollutants from the air blown into the cab through said circuit;
   said process comprising:
   - a regular procedure wherein the air-conditioning system is operated to blow the air supplied by said circuit into the cab,
      said process comprising a test of the efficiency of the filtration means, wherein said test provides for:
      - spraying an identified fluid into the circuit upstream of the filtration means whilst the blowing device is operated to blow an air flow inside the circuit;
      - monitoring the air flow supplied by the circuit at a location downstream of the filtration means for detection of the possible presence of the sprayed fluid by means of at least one appropriate sensor provided at said downstream location; and
      - providing by means of said at least one sensor a signal representative of the efficiency of said filtration means upon the detection of such a presence.

According to a second aspect, the invention relates to a vehicle, in particular an agricultural machine, comprising a cab equipped with an air-conditioning system which is configured to be operated by such a process.

Other aspects and advantages of the invention will become apparent in the following description made with reference to the appended figures, wherein:
- figures 1 represent schematically a cab of a vehicle according to an aspect of the invention, respectively in perspective front view (figure 1a), in perspective rear view without the upper cover of the air conditioning system (figure 1 b), and in a side view without said upper cover (figure 1 c);
- figure 2 represents in an exploded view the pressurization set of the air conditioning system equipping the cab of figures 1, with means for switching between first and second filtration modes;
- figures 3 represent schematically in a top view the operation of the air-conditioning system of figures 1, 2 during the regular procedure, said air-conditioning system being arranged respectively in a first (figure 3a) and in a second (figure 3b) filtration modes;
- figure 4a represents schematically the steps of the procedure for switching the air conditioning system between the first and second filtration modes, figure 4b representing schematically a pressurization set with switching means;
- figure 5 represents schematically the steps of a process according to the invention.

In relation to those figures, we describe below a vehicle comprising a cab equipped with an air conditioning system.

The vehicle is in particular an agricultural machine arranged for the mechanical spreading of treatment products, such as phytosanitary products, insecticides or fertilizers, on the crop plants and/or the plowed soil of an agricultural field, such as a vineyard or an orchard.

To do so, the machine comprising a motorized support structure which is equipped with a driver station and movable in particular along rows of plants and/or furrows of an agricultural field, a spreading unit being mounted on said structure for straddling at least one of said rows and spreading determined quantities of at least one treatment product on said rows.

In particular, the spreading unit can be mounted on the support structure permanently or removably, so as to be replaceable by other equipment and accessories, for example harvesting equipment, pruning equipment or equipment for working the soil.

The machine is in particular adapted to be driven by a human operator. To do so, the driver station comprises a closed cab 1 wherein the operator is intended to seat for actuating the commands means for moving said machine and/or operating the spreading unit.

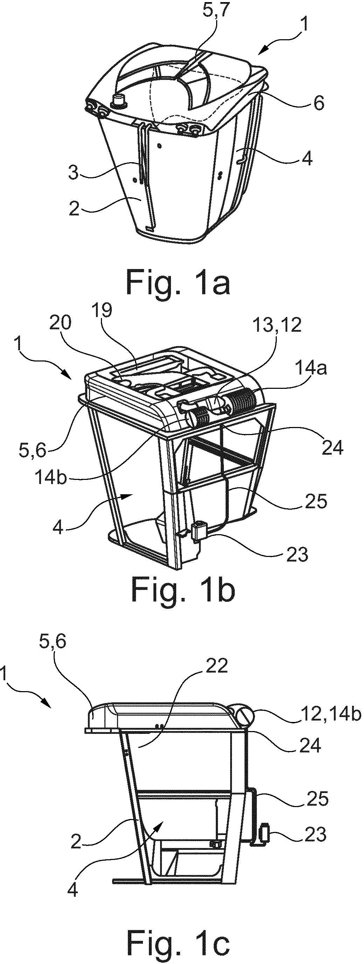

In relation to figure 1, the cab 1 comprises a front windshield 2 made from a substantially transparent and solid material, for example laminated glass, for protecting the operator from wind and/or rain while ensuring a good visibility to allow said operator to drive safely the machine, as well as a device 3 for automatically washing said windshield, in particular with an appropriate product, for removing dirt that can potentially hinder said visibility .Moreover, the cab 1 comprises at least one operator access, in particular a lateral access door 4, for allowing the operator to come into and out of the cab 1.

Treatment products used in the agricultural domain are generally harmful for the health. In particular, during spreading operations, a quantity of such products may diffuse in the air, in particular in the form of dusts, aerosols and/or vapors, and form air pollutants which, if there are inhaled by the operator, in particular repeatedly, may cause in the long term serious and invalidating professional pulmonary and/or respiratory diseases.

For limiting the risks of exposure of the operator to such air pollutants, the cab 1 is equipped with an air conditioning system 5 that is adapted to condition the air circulating in said cab, in particular by feeding said cab with air that is mainly free from such pollutants.

In relation to the figures, the air conditioning system 5 is implemented in the roof of the cab 1, in particular into a sealed compartment 6 which is fixed, for example by gluing, to said roof, and which is accessible from the exterior of the cab 1 by means of an upper removable maintenance cover 7. In particular, the maintenance cover 7 may comprise a peripheral edge which is equipped with a sealing gasket 8, so as to ensure the sealed closing of the compartment 6.

In a known manner, the air conditioning system 5 comprises components and control means, for example a control circuit board, for allowing the operating of said system, in particular upon communication with command means implemented within the cab 1, according to a predetermined process, such as:
- a circuit 9 which supplies the cab 1 with air coming from a recycling branch 9a fed with air coming from said cab and an exterior branch 9b fed with air coming from the exterior of said cab;
- a blowing device 10 for blowing an air flow inside said circuit;
- filtration means 11 for removing pollutants from the air blown into the cab through said circuit.

In relation to the figures, the air conditioning system 5 comprises a pressurization set 12 which is arranged upstream of the circuit 9, said set comprising a central housing 13, wherein the blowing device 10 is arranged, and two lateral housings 14a, 14b, wherein respectively a first 11 a and a second 11 b filtration means are arranged.

The lateral housings 14a, 14b are in fluid communication with the exterior of the cab 1, so as to allow circulation through said housings of air coming from said exterior and to remove pollutants from said exterior air by means of the filtration means 11 a, 11 b arranged within said housings.

Moreover, the central housing 13 is in fluid communication with the interior of the cab 1, so as to allow the blowing into the recycling branch 9a of a recycled air flow F_{R} coming from said cab, as well as with the lateral housings 14a, 14b, so as to allow the blowing into the exterior branch 9b of an exterior air flow F_{E} that has been filtered by at least one filtration means 11 a, 11 b.

The filtration means 11, 11 a, 11 b may be adapted to remove pollutants in accordance with the requirements of at least the category 2 defined by standard EN-15695, so as to be able to remove at least dust pollutants from the air flow to be blown in the cab 1, and more particularly with the requirements of the maximal category 4 of said standard, so as to be able to remove not only dusts, but also aerosol and vapor pollutants from said air flow.

In the embodiment shown, the air conditioning system 5 comprises first 11 a and second 11 b filtration means that comply with the requirements of respectively the categories 2 and 4 of the standard EN-15695, said filtration means being made for example respectively from paper and from charcoal.

Further, the air conditioning system 5 comprises means for selectively switching between two filtration modes corresponding respectively to category 2 and 4 filtration levels, wherein the filtrations means 11 a, 11 b are selectively put in fluid communication with the blowing device 10 according to the desired level of filtration.

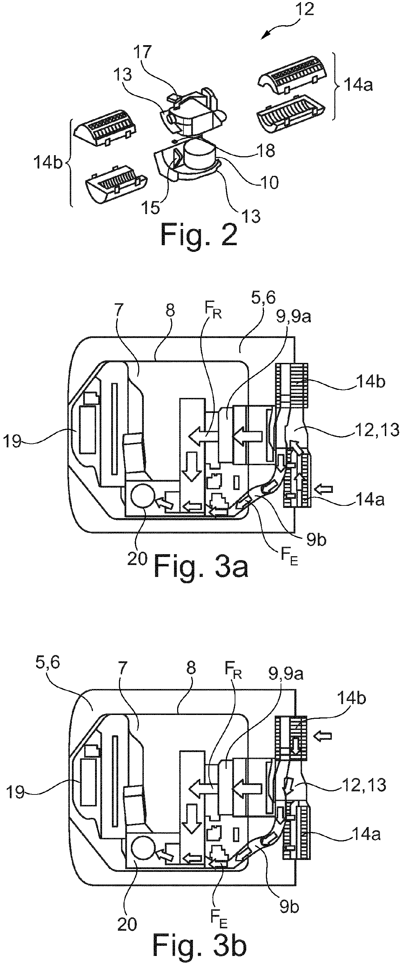

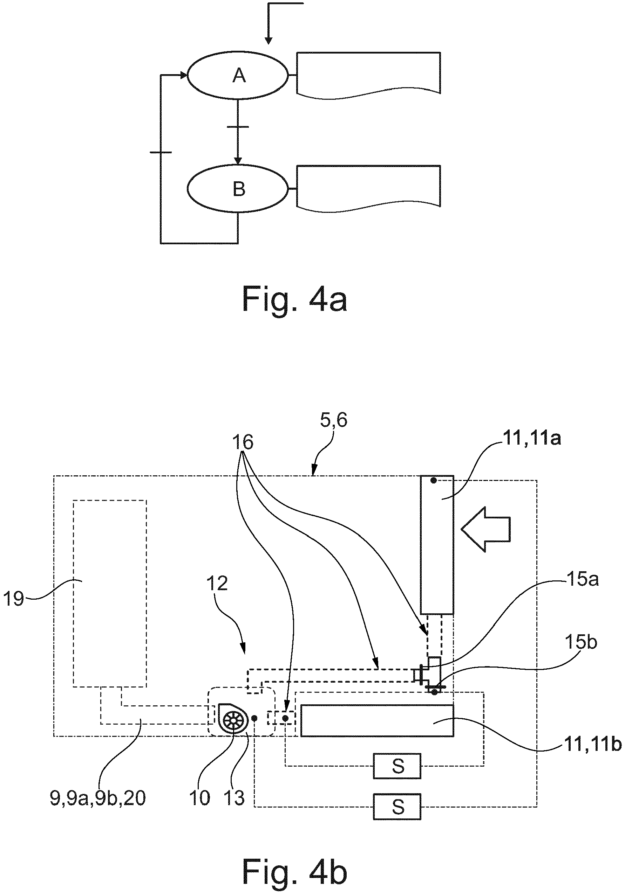

In relation with figures 2 and 4b, the switching means comprise at least a filter selection valve 15 (figure 2), and in particular two selection valves 15a, 15b and appropriate control captors S (figure 4b), arranged in fluid communication paths 16 relying the central housing 13 and respectively first category 2 14a and second category 4 14b filtering housings, said valve(s) being arranged to be selectively actuated, in particular by means of an actuator 17 to which said valve is linked through a connector 18 (figure 2), respectively in category 2 and 4 filtration modes, wherein said valve(s) close(s) - respectively open(s) - the fluid communication between the category 4 filtration housing 14b and the central blowing housing 13 and open(s) - respectively close(s) - the fluid communication between the category 2 filtration housing 14a and said central housing.

Thus, in a particularly advantageous manner, the operator can benefit from a high level of filtration only when required, in particular only during the performing of a spreading operation in an agricultural field, and can switch to a lower level of filtration of category 2 when the risks of air pollution are lower, for example during a travel between an agricultural field and a vehicle garage. Such a configuration allows to limit the saturation of the category 4 filtration means 11 b and to increase its lifetime, knowing that category 4 filters have generally a lifetime of approximately 300 hours, which is quite short in relation to the lifetime of approximately 1 year of the category 2 filters.

The air conditioning system 5 may further comprise additional filtration means that may be arranged at the fluid communication path between the interior of the cab 1 and the central housing 13, so as to remove possible air pollutants from the recycled air flow coming from said cab.

Moreover, the air conditioning system 5 comprises a HVAC device 19 (for Heating, Ventilation and Air Conditioning) which is arranged downstream of the circuit 9 for conditioning the air flow blown in the cab 1 through said circuit, said HVAC device comprising a feeding duct 20 into which both of the circuit branches 9a, 9b end for feeding said HVAC device with the air flow to be conditioned and blown into the cab 1.

In relation with the figures, we describe now a process of operating the air conditioning system 5.

In particular, the process comprises a filtration mode selection procedure wherein the switching means are operated to select one filtration mode, either upon manual activation of an appropriate means by the operator in the cab 1, for example a button or a switch on a control board within said cab, or upon automatic detection of an appropriate signal corresponding to the actuation state of the spreading unit.

More precisely, the filtration mode selection procedure provides two steps A, B wherein the switching means 15, 15a, 15b are put respectively in the category 2 and category 4 filtration mode. Moreover, the selection procedure provides the monitoring of appropriate signals, for example the manual actuation of a command means in the cab 1 or the possible actuation/deactivation of the spreading unit, and to perform switching from one step A, B to another, according to the results of said monitoring.

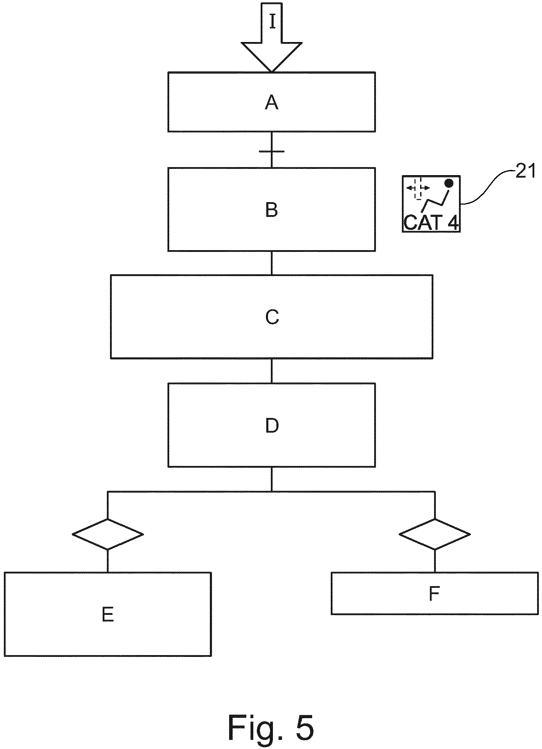

In an advantageous manner, the process can provide for performing the filtration mode selection procedure upon initial actuation I of the air conditioning system 5. In particular, as stated in figure 5, the category 2 mode selection step A is performed just after the initial actuation step I, so as to put by default the pressurization set 12 in the category 2 filtration mode.

Afterwards, the process provides for monitoring an appropriate signal as described above and for performing the category 4 mode selection step B upon the detection of such signal. In particular, the process can provide for informing the operator that the pressurization set 12 is in the category 4 filtration mode, in particular upon actuating an indicator lighting button 21 on the control board in the cab 1.

In relation to figures 3, the process comprises a regular air conditioning procedure wherein the air conditioning system 5 is operated to blow the air supplied by each of the recycling 9a and exterior 9b branches of the circuit 9 into the cab 1, and thus whatever the filtration mode selected.

In particular, the regular procedure can provide for operating the air conditioning system 5 to supply the cab 1 with a total flow of air comprising approximately 80% of a flow F_{R} of recycled air coming from the recycling branch 9a and approximately 20% of a flow F_{E} of exterior air coming from the exterior branch 9b.

Moreover, to comply with the requirements of at least the category 2 defined by standard EN-15695, the regular procedure can provide for operating the air conditioning system 5 so that the air flow F_{R}, F_{E} supplied in the cab 1 has a flow rate of at least 30m³/h with an overpressure in said cab of at least 20Pa.

In relation to figure 5, the process provides for performing the regular procedure upon initial actuation I of the air conditioning system 5, the steps A, B of the filtration mode selection procedure being performed during said regular procedure just after the initial actuation step I.

Thus, during the regular procedure, the cab 1 is regularly supplied with a flow of fresh air F_{R}, F_{E} coming from both of the inside and the exterior of the cab 1, said flow being previously filtered by appropriate filtration means 11, 11 a, 11 b, for removing pollutants generated in particular by the spreading product before being blown into said cab.

However, because of the ongoing uses, the filtration means 11 a, 11 b may be saturated with filtrated air pollutants, till they cannot filtrate anymore, which may threaten the safety of the operator. Thus, upon such a saturation, the filtration means 11 a, 11 b must be changed.

To detect such condition, the process comprises a test of the efficiency of the filtration means 11 a, 11 b, said test allowing to know in real time the real saturation state of said filtration means, and then to decide to replace or not said filtration means according to said state.

In particular, the test can be performed automatically upon activation of an appropriate means for selecting the filtration means 1a, 11 b, and more particularly just after the filtering mode selection procedure, which allows for testing the efficiency of the filtration means 11 a, 11 b that has been selected upon said procedure. Moreover, the test can be performed before the actuation of the spreading unit of the machine, so as to avoid air pollution by the spreading product before said performance, and then to avoid exposure of the operator to said air pollution in case of a saturation of the selected filtration means 11 a, 11 b.

The test can be performed upon manual activation of an appropriate means by the operator in the cab 1, such as for example a button or a switch on the control board in said cab. Moreover, the regular procedure can also provide to perform automatically the test within said procedure at a predetermined time, in particular at periodical intervals of time, or after a predetermined time interval.

In relation to figure 5, the test provides at first a step C for spraying an identified fluid into the circuit 9 upstream of the filtration means 11 a, 11 b, and thus whilst the blowing device 10 is operated to blow air inside the circuit 9.

To do so, the air conditioning system 5 may comprise a spraying device 24 for operable to spray the fluid which is provided upstream of the filtration means 11 a, 11 b, the providing for operating said spraying device, either upon manual activation of an appropriate means by the operator or automatically within the regular procedure.

According to a variant, the test can provide for a manual spraying of the identified fluid, for example by means of a hand bottle comprising a reservoir of such identified fluid and a device for manually spraying the fluid contained within said reservoir.

Once the identified fluid has been sprayed, the test proceeds to a step D for monitoring the air flow supplied by the circuit 9 at a location downstream of the filtration means 11 a, 11 b for detection of the possible presence of the sprayed fluid, and thus by means of at least one appropriate sensor provided at said downstream location.

In relation to figures 1, the detection of the possible presence of sprayed fluid can be performed at a location 22 within the cab 1, in particular near the roof of said cab. To this end, the cab 1 may comprise at least one appropriate sensor, such as for example a sensor adapted to detect Volatile Organic Compounds (VOC) and/or carbon dioxide (CO₂), said sensor being implemented near the location 22.

In particular, the identified fluid may present a limited toxicity, in particular by being not harmful to the respiratory and/or pulmonary health of the operator in the cab 1. Moreover, the identified fluid may be easily detectable by the sensor at the location 22, in particular by comprising at least Volatile Organic Compound(s) (VOC) and/or carbon dioxide (CO₂).

Advantageously, the identified fluid may comprise a windshield washer fluid, said fluid being not only safe for the respiratory and/or pulmonary health of the operator, but also easily detectable by sensors as mentioned above, and readily available on the market due to its widespread use.

In relation to figures 1, the cab 1 is equipped with a reservoir 23 of windshield washer fluid, the test providing for spraying a quantity of fluid from said reservoir during the step C. In particular, the reservoir 23 is equipped with a pump which is connected to the spraying device 24 of the air conditioning system 5, for example through a tube 25, the test providing for operating said pump to feed said spraying device.

Once the step D for possible detection of sprayed identified fluid by the sensor has been performed, the test provides for providing, by means of said sensor, a signal representative of the efficiency of the tested filtration means 11 a, 11 b upon the detection of such a presence.

In particular, the signal can be provided directly to the operator in the cab 1. To do so, the cab 1 comprises communication means, such as for example a screen, a lighting button and/or speaker implemented in said cab and/or on the control board of said cab, the signal activating said communication means.

In relation to figure 5, in the case when the sensor at location 22 has effectively detected the sprayed fluid during the step D, the test provides a consecutive step E for providing to the operator a signal indicating that the filtration means 11 a, 11 b is no longer efficient and should be replaced. Otherwise, the test provides a consecutive step for providing a signal indicating that the filtration means 11 a, 11 b is still efficient, so that the machine can still be used for spreading without any threat for the health of the operator.

## Claims

1. Process of operating the air conditioning system (5) of a cab (1) of a vehicle, said air-conditioning system comprising:
- a circuit (9) for supplying said cab with air coming at least partially from the exterior of said cab;
- a blowing device (10) for blowing an air flow inside said circuit;
- filtration means (11 a, 11 b) for removing pollutants from the air blown into the cab (1) through said circuit;
said process comprising:
- a regular air conditioning procedure wherein the air-conditioning system (5) is operated to blow the air supplied by said circuit into the cab (1), said process being **characterized in that** it comprises a test of the efficiency of the filtration means (11 a, 11 b), wherein said test provides for:
- spraying an identified fluid into the circuit (9) upstream of the filtration means (11 a, 11 b) whilst the blowing device (10) is operated to blow an air flow inside the circuit (9);
- monitoring the air flow supplied by the circuit (9) at a location (22) downstream of the filtration means (11 a, 11 b) for detection of the possible presence of the sprayed fluid by means of at least one appropriate sensor provided at said downstream location; and
- providing by means of said at least one sensor a signal representative of the efficiency of said filtration means upon the detection of such a presence.

2. Process according to claim 1, **characterized in that** the air-conditioning system (5) comprises a spraying device (24) operable to spray the fluid upstream of the filtration means (11 a, 11 b), the test providing for operating said spraying device.

3. Process according to claim 1 or 2, **characterized in that** the test is performed upon manual activation of an appropriate means by an operator in the cab (1).

4. Process according to any of claims 1 to 3, **characterized in that** the test is performed automatically upon activation of an appropriate means for selecting a filtration means (11 a, 11 b).

5. Process according to any of claims 1 to 4, **characterized in that** the regular procedure provides for automatically performing the test within said regular procedure after a predetermined time interval or at a predetermined time.

6. Process according to any of claims 1 to 4, **characterized in that** the identified fluid comprises windshield washer fluid and the cab (1) is equipped with a reservoir (23) of said windshield washer fluid, the test providing for spraying a quantity of said fluid from said reservoir.

7. Process according to claim 6, **characterized in that** the reservoir (23) of windshield washer fluid is equipped with a pump, the test providing for operating said pump to feed a spraying device (24) disposed upstream of the filtration means (11 a, 11b).

8. Process according to any of claims 1 to 7, **characterized in that** the cab (1) comprises communication means, the signal representative of the efficiency of the filtration means (11 a, 11 b) activating said communication means.

9. Process according to any of claims 1 to 8, **characterized in that** the filtration means (11 a, 11 b) are adapted to remove pollutants in accordance with the requirements of at least the category 2 defined by standard EN-15695.

10. Process according to claim 9, **characterized in that** the filtration means (11 a, 11 b) are adapted to remove pollutants in accordance with the requirements of the category 4 defined by standard EN-15695.

11. Process according to any of claims 1 to 10, **characterized in that** the regular procedure provides for operating the air-conditioning system (5) so that the air flow (F_{R}, F_{E}) supplied in the cab (1) has a flow rate of at least 30 m³/h with an overpressure in the cab (1) of at least 20 Pa.

12. Process according to any of claims 1 to 11, **characterized in that** the detection of the possible presence of sprayed fluid is performed at a location (22) within the cab (1).

13. Vehicle, in particular an agricultural machine, comprising a cab (1) equipped with an air-conditioning system (5) which is configured to be operated by a process according to any of claims 1 to 12.

14. Vehicle according to claim 13, **characterized in that** the cab (1) is equipped with a reservoir (23) of windshield washer fluid, the air-conditioning system (5) being adapted to be operated for spraying a quantity of said fluid from said reservoir during the test.
